# FASCICULE DE BREVET EUROPEEN

(11) **EP 2 734 044 B1**
(45) Date de publication et mention de la délivrance du brevet: **17.06.2015**
(21) Numéro de dépôt: 12735887.7
(22) Date de dépôt: 18.07.2012
(51) Int. Cl.: A01N 59/00, A01N 59/08, A01G 17/02, A01P 3/00

(54) **AGENT POUR LE TRAITEMENT DES BOIS DE VIGNE**
MITTEL ZUR BEHANDLUNG VON WEINREBENHOLZ
AGENT FOR TREATING GRAPE VINE WOOD

(30) Priorité: 18.07.2011 FR 1156522
(43) Date de publication de la demande: 28.05.2014
(73) Titulaire: Financiere Mercier, 85770 Vix (FR)
(72) Inventeur: MERCIER, Miguel, F-85770 Vix (FR); ZEKRI, Olivier, F-17000 La Rochelle (FR)
(74) Mandataire: Flesselles, Bruno F.G.
(86) Numéro de dépôt international: PCT/EP2012/064061
(87) Numéro de publication internationale: WO 2013/011053

(56) Documents cités:
- EP-A2- 0 347 731
- WO-A2-01/58265
- WO-A2-2009/106645

## Description

L'invention concerne un procédé de production de plant de vigne comprenant diverses étapes de nettoyage et désinfection des bois de vigne.

Les maladies du bois (eutypiose, esca et BDA), longtemps considérées comme secondaires, sont devenues une préoccupation grandissante des viticulteurs. En l'absence de moyens de lutte préventifs ou curatifs, des mesures prophylactiques préconisées sont très inégalement suivies.

Des études menées en pépinière ont montré que certains champignons responsables des trois principales maladies fongiques de dépérissement de la vigne que sont l'eutypiose (*Eutypa lata),* l'esca (implication de *Phaeomoniella chlamydospora, Phaeoacremonium aleophilum, Fomitiporia mediterranea* et *E. lata*) et le Black Dead Arm *(Botryosphaeria obtusa, Botryosphaeria dothidea parva* et *stevensii*) sont présents lors des étapes de production des plants. Laurent BERNOS indique que « *certaines* [de ces étapes] *ont pu être identifiées, telles que la réhydratation, la stratification (pour Phaeomoniella chlamydospora et certains Botryosphaeriaceae) et l'élevage au champ (pour Phaeoacremonium aleophilum, Phomopsis viticola et certains Botryosphaeriaceae). A ce jour, aucun moyen efficace de désinfection n'existe quelle que soit l'étape de production des plants. Seul le traitement à l'eau chaude utilisé pour la lutte contre la flavescence dorée montre une efficacité partielle sur certain de ces champignons* » (voir Recherche et évaluation de procédés permettant la production de plants indemnes de champignons associés aux maladies du bois (programme Casdar) *in* Les Maladies du Bois de la Vigne, 16-17 novembre 2010, Villefranche/Saône Compte Rendu, rédigé par Philippe Larignon, IFV (Institut Français de la Vigne et du Vin), http://www.vignevin-sudouest.com/publications/fiches-pratiques/documents/MDB-2010_000.pdf).

En particulier, EP 347731 décrit l'utilisation de peroxyde d'hydrogène ou d'ozone pour traiter les vignes contre les parasites ([0005]). Il ne suggère en aucun cas, ni ne propose de substituer l'anolyte neutre à ces produits.

WO 2009/106645 décrit un procédé de nettoyage d'installations agroalimentaires par utilisation d'une solution aqueuse contenant un anolyte particulier, et ne se rapporte dont pas à la décontamination des bois de vigne.

WO 01/58265 envisage l'utilisation de dioxyde de chlore pour le contrôle de parasites présents dans les sols (tels que les insectes et les nématodes).

Il est d'autant plus important de s'assurer que les plants de vigne issus des pépinières soient au maximum exempts de germes de ces champignons qu'il n'existe aucune méthode de lutte chimique ou biologique efficace à ce jour au vignoble, l'arsénite de sodium n'étant plus homologué, car trop toxique pour l'homme et pour l'environnement. Il est à noter que l'association de carbendazime et de fluzilazole dispose d'une homologation provisoire contre l'esca, l'application se faisant en badigeonnant la plaie aussitôt après la taille.

A la vigne, la meilleure méthode de lutte contre ces pathogènes est la prophylaxie, et notamment l'élimination des bois morts, ou l'application très rapide après la taille de goudron ou mastic sur les plaies.

Les Déposants ont montré que l'on peut utiliser l'anolyte neutre pour décontaminer des bois de vigne, notamment lors de la production de plants de vigne en pépinière et que ce produit permet d'obtenir des résultats très positifs sur la présence de champignons pathogènes.

L'anolyte neutre est également utilisable pour la décontamination et la désinfection de l'ensemble des outils et du matériel utilisés dans la production de plants de vignes.

A partir d'un mélange d'eau et de sel, des unités produisent, par une technique d'électrolyse à membrane, un biocide appelé anolyte neutre. Cette solution possède un très fort pouvoir désinfectant (bactéricide, virucide, fongicide, algicide). Son pouvoir oxydant agit également sur le biofilm dans les canalisations. De plus l'anolyte neutre génère une dynamisation de l'eau. Au sein du système de production du désinfectant, un courant électrique circule dans une solution saturée en sel entre deux éléments métalliques, appelés anode et cathode. La saumure produite se dissocie et génère 2 produits : l'Anolyte acide : pH entre 2 et 5 et la Catholyte : pH entre 11 et 13. Ces 2 solutions sont mélangées dans le bac de stockage. Le produit final, appelé anolyte neutre, se caractérise par un pH neutre et un potentiel redox supérieur à 750 mV (celui de l'eau chlorée est de 400 mV).

L'anolyte neutre est ainsi déjà connu en tant qu'agent désinfectant et est utilisé dans différents domaines de l'agriculture, notamment dans la désinfection des élevages. Ainsi, dans les domaines de l'agriculture et de l'horticulture, on a décrit ce produit comme pouvant être utilisé pour la désinfection dans le stockage des grains et des graines ou la purification de l'eau d'irrigation pour la pulvérisation des moissons, afin de diminuer les parasites. Il peut également préserver l'ensilage de contamination.

La concentration d'anolyte neutre peut être modifiée, par mélange avec de l'eau. Ainsi, on obtient une composition concentrée à 10 % (en volume) en anolyte neutre en mélangeant neuf volumes d'eau avec un volume d'anolyte neutre. Si l'on n'ajoute pas d'eau, la solution est donc concentrée à 100 %.

Toutefois, ce produit n'a jamais été utilisé ou proposé pour la production de des plants de vigne, qui sont des « bois », et dont les pathogènes sont situés à la fois à l'intérieur et à l'extérieur. Ainsi, ce produit réussi à avoir un impact sur les écorces, mais aussi dans les tissus vasculaires.

On peut ainsi noter que Vigues et al (Les maladies du bois, Tests de méthodes de désinfection en pépinière dans le Compte-rendu du colloque sur les maladies du bois de la vigne des 16 et 17 novembre 2010, *op. cit.)* ne citent pas l'anolyte neutre dans les produits envisagés pour désinfecter les plants de vigne, ayant en revanche testés plusieurs désinfectants possibles.

Par ailleurs, les Demandeurs ont montré que l'application de l'anolyte neutre permet de préserver des champignons favorables (tels que les *Trichoderma* qui ont un effet contre certains pathogènes) introduits au cours de la production des plants.

L'invention se rapporte ainsi à l'utilisation d'anolyte neutre pour décontaminer des bois de vigne. Cette utilisation est notamment effectuée en pépinière lors de la production de plants de vigne, mais peut également être effectué en plein champ.

L'invention se rapporte également à une méthode de production de plants de vigne comprenant au moins une étape de mise en contact des porte-greffes, greffons ou plants de vigne (obtenus après greffage), avec de l'anolyte neutre.

Comme tous les végétaux, la vigne peut être multipliée par semis, bouture ou greffage. Dans les faits, la nécessité de greffer sur la grande majorité des terrains a encouragé les pépiniéristes à unifier le processus.

Les boutures de porte-greffe sont coupées pendant la période végétative (hiver) à environ 30 cm de longueur, celles des greffons à quelques cm, au moment de la taille.

Les boutures sont « nettoyées », calibrées, et conservées à basse température, en milieu saturé d'humidité.

Pour confectionner les plants, les porte-greffes sont ramenés à la longueur souhaitée, puis trempés dans une solution désinfectante. Les greffons sont débités et réhydratés.

Ils sont ensuite sont assemblés au moyen d'une entaille. Il existe plusieurs formes d'entaille. Dans tous les cas elle doit permettre le bon développement du cal de soudure, et être suffisamment solide pour supporter les manipulations ultérieures. On utilise généralement une greffe en oméga, qui ne nécessite pas de ligature et permet un rythme très rapide de greffage.

Généralement et afin d'éviter les contaminations et de protéger la soudure, les points de greffe sont trempés dans une cire aseptisante et étanche à l'air, afin de consolider la greffe et d'éviter le dessèchement des tissus. Les assemblages (greffes paraffinées) sont ensuite mis à cicatriser horizontalement dans des récipients comblés de sable ou d'un autre minéral (tel que la vermiculite) humide dans une étuve. Ces récipients (caisses en bois) sont rendus étanches par un film plastique. Cette opération permet la formation du cal de soudure en quelques jours seulement.

Après cicatrisation, les caisses sont vidées de leur eau et placées dans une chambre chaude entre 25°C et 28°C et une hygrométrie de 70 à 80%. Pour éviter le dessèchement des greffons, on place sur les caisses un film et des copeaux de bois ou autre élément (vermiculite).

Le maintien dans la chambre chaude déclenche la stratification : le cal de soudure grossit, les bourgeons et les radicelles se développent.

L'objectif de la stratification ou forçage est ainsi d'obtenir un tissu de soudure qui donne un bourrelet entre le greffon et le porte-greffe, de préparer le talon du porte greffe à l'émission des futures racines, et de faire développer le bourgeon du greffon avec les deux ou trois premières petites feuilles.

Les plants greffés-soudés sont ensuite mis en terre en pépinière ou en champ, généralement de mai à novembre/décembre, afin de faire développer un bon système racinaire sur le talon du porte-greffe et de d'obtenir une pousse sur le greffon.

Les plants prêts à être vendus sont alors sortis de terre, triés, conditionnés et conservés en chambre froide jusqu'à la livraison.

Dans un mode de réalisation de la méthode selon l'invention, celle-ci présente une étape d'application d'anolyte neutre sur les porte-greffes et greffons pendant la phase de réhydratation précédant l'étape de greffe.

Pour cette application, on préfère que l'anolyte neutre présente une concentration comprise entre 3 et 50% (en volume), préférentiellement entre 3 et 30%, de façon plus préférée entre 3 et 10%. Le choix de la concentration est déterminé en fonction de l'origine et de l'état initial du matériel végétal prélevé. De fait, si le risque de contamination des porte-greffes et greffons est important, on utilisera une composition plus concentrée en anolyte neutre.

Dans ce mode de réalisation, l'application est effectuée de préférence par immersion totale du matériel végétal dans la solution d'anolyte neutre pendant une durée comprise entre 10 et 48 heures, de préférence entre 10 et 24 heures, de façon plus préférée entre 10 et 15 heures. La durée d'application dépend principalement de l'état de déshydratation des bois.

Dans un mode de réalisation préféré, on immerge le matériel végétal dans une solution d'anolyte neutre concentré à 6% pendant 12h.

Il est préférable de renouveler la solution désinfectante entre chaque bain, afin de garantir un maintien des capacités désinfectantes. Toutefois, cette solution peut également être conservée pour 2 ou 3 applications.

Dans un mode de réalisation de la méthode selon l'invention, celle-ci comprend une étape d'application d'anolyte neutre sur les plants de vigne après greffage, pendant la phase de cicatrisation.

Cette application est réalisée lors du stockage des assemblages dans les récipients, et de préférence par hydratation du sable ou autre minerai utilisé avec une solution d'anolyte neutre à une concentration supérieure à 80%, de préférence égale à 100 %.

Dans un mode de réalisation de la méthode selon l'invention, celle-ci comprend une étape d'application d'anolyte neutre sur les plants de vigne pendant la phase de stratification.

Dans ce mode d'application, l'anolyte neutre est préférentiellement utilisé à une concentration comprise entre 3 et 10 %. Il est appliqué par vaporisation au niveau des bourgeons en phase d'ouverture. Par ailleurs, la solution d'anolyte neutre ainsi concentré est utilisée dans les caisses palettes au niveau du talon.

Cette étape est mise en oeuvre à partir du moment où le chapeau de vermiculite est retiré et que les plants sont maintenus en chambre chaude, à une température comprise entre 25 et 29°C, de préférence autour de 28-29°C avec de l'eau au niveau du talon (5 cm d'eau dans les caisses). La fréquence de vaporisation est variable et est appliquée de manière a garder le milieu ambiant à un taux d'humidité élevé (70 à 80 % d'humidité) (on effectue ainsi généralement plusieurs vaporisations par jours).

La méthode peut également présenter une étape d'application d'anolyte neutre sur les plants de vigne pendant la phase de croissance, après qu'ils ont été mis en terre, en pépinière ou en plein champ.

Pour cette application, on utilise de préférence de l'anolyte neutre à une concentration allant jusqu'à 50 %, de préférence comprise entre 15 et 50%. L'application est réalisée par vaporisation sur les feuilles et/ou par goutte à goutte lors de l'irrigation des plants.

On utilise l'anolyte neutre à partir du stade 4ème feuilles. Lorsque les plantes sont enracinées en champ, on renouvelle de préférence l'application environ tous les 7 jours en période humide et tous les 14 jours en période sèche.

Enfin, on peut également utiliser l'anolyte neutre pour la préparation des plants greffés avant conditionnement et stockage en chambre froide lors de la préparation pour la livraison.

Cette application est effectuée sur les plants racines greffés-soudés par immersion des racines nues dans une solution d'anolyte neutre à une concentration supérieure à 75%, de préférence égale à 100%, pendant une durée comprise de préférence entre 1 et 5 heures. Ce dernier traitement peut être répété avant la livraison des plants si la durée de stockage excède 2 mois.

Par ailleurs, il est particulièrement intéressant de désinfecter tout le matériel et les éléments susceptibles d'être en contact avec le matériel végétal en utilisant une solution d'anolyte neutre à une concentration supérieure à 75%, de préférence égale à 100%. Cette désinfection est effectuée de préférence au moins une fois par jour.

Dans un autre mode de réalisation, on utilise l'anolyte neutre sur des vignes enracinées en plein champ. Dans ce mode de réalisation, l'anolyte neutre est utilisé pour aider à combattre ou prévenir les infections fongiques en plein champ. En particulier, on peut utiliser l'anolyte neutre pendant la taille des vignes, en pulvérisant la plaie aussitôt après la taille. On utilise de préférence une solution d'anolyte neutre à une concentration comprise entre 3 et 75 %, de préférence entre 25 et 50 %.

Cette utilisation n'est pas exclusive de l'utilisation de goudron ou mastic sur les plaies de taille.

L'invention se rapporte ainsi à un procédé de production d'un plant de vigne greffé-soudé comprenant au moins une étape choisie parmi
a) une étape consistant à entailler un porte-greffe et un greffon
b) une étape consistant à assembler lesdits porte-greffe et greffon afin de former un assemblage
c) une étape comprenant la cicatrisation de l'assemblage pour former un cal de soudure et la stratification dudit cal
d) une étape de croissance du plant de vigne,
ledit procédé étant caractérisé en ce que l'on applique une solution d'anolyte neutre aux plants en cours de production lors de ladite étape.

Dans un mode de réalisation particulier, ladite étape est l'étape a).

Dans un mode de réalisation particulier, ladite étape est l'étape b).

Dans un mode de réalisation particulier, ladite étape est l'étape c).

Dans un mode de réalisation particulier, ladite étape est l'étape d).

Dans un mode de réalisation particulier, le procédé comprend au moins deux étapes lors de lesquelles on expose les plants de vigne en cours de production à l'anolyte neutre. Dans un mode de réalisation particulier, les deux étapes pendant lesquelles on expose les plants à l'anolyte neutre sont les étapes a) et b). Dans un autre mode de réalisation, il s'agit des étapes a) et c). Dans un autre mode de réalisation, il s'agit des étapes b) et c). Dans un autre mode de réalisation, il s'agit des étapes a) et d). Dans un autre mode de réalisation, il s'agit des étapes b) et d). Dans un autre mode de réalisation, il s'agit des étapes c) et d).

Dans un mode de réalisation particulier, le procédé comprend au moins trois étapes lors de lesquelles on expose les plants de vigne en cours de production à l'anolyte neutre. Dans un mode de réalisation particulier, les trois étapes pendant lesquelles on expose les plants à l'anolyte neutre sont les étapes a), b) et c). Dans un autre mode de réalisation, il s'agit des étapes a), b) et d). Dans un autre mode de réalisation, il s'agit des étapes a), c) et d). Dans un autre mode de réalisation, il s'agit des étapes b), c) et d).

Dans un mode de réalisation particulier, le procédé comprend les quatre étapes a) à d) et l'on expose les plants de vigne en cours de production à l'anolyte neutre au cours quatre étapes a) à d). Les conditions d'application de l'anolyte neutre sont préférentiellement celles décrites plus haut.

La présente invention dévoile donc que l'anolyte neutre en tant qu'agent décontaminant de bois de la vigne, à la fois en tant qu'agent prophylactique (prévention) notamment lors de la préparation de plants de vigne, qu'en tant qu'agent curatif.

L'utilisation d'anolyte neutre permet ainsi la production de plants de vigne sains, exempts des champignons identifiés comme étant responsable des maladies du bois. Le procédé selon l'invention ne prétend pas supprimer toute la flore commensale de la vigne mais réduire significativement les taux d'inoculum des champignons pathogènes présents et empêcher la prolifération de ceux-ci pendant le processus de production des plants de vigne.

### EXEMPLES

### Exemple 1 - Essai comparatif in vivo du traitement à l'anolyte neutre avec l'H₂O₂ (eau oxygénée), Désogerme (Biofongicide - laboratoire A.C.I, noté T1), et l'H₂O.

Des essais comparatifs « *in vivo* » et « *in vitro* » ont été réalisés pour évaluer si l'eau, l'eau oxygénée, le désogerme et l'anolyte neutre (100%) avait une action sur 8 champignons référencés comme pathogènes et associé aux différentes maladies du bois.

L'essai *in vivo* a consisté à évaluer un ensemble de 1025 plantes provenant de 4 porte-greffes et 5 variétés différentes (pour limiter l'effet variétal). Les plants ont fait l'objet de prélèvements avant et après traitement.

Le traitement a consisté à plonger les bois dans les différentes solutions faisant l'objet de l'essai et pendant une durée de 12h, soit la durée de réhydratation habituelle des bois en pépinière (une nuit).

Les prélèvements de bois avant et après traitement ont été analysés, par extraction des ADN totaux des échantillons de bois prélevés, et évaluation par par diagnostic moléculaire (analyse PCR) de la présence ou de l'absence de ces 8 champignons : *Botryosphaeria obtusa, Botryosphaeria dothidea, Eutypa lata, Fomitiporia punctata, Phaeacremonium aleophilum, Phaeomonelia chlamydospora, Phaeoacremonium* spp. et *Cylindrocarpon destructans.*

Les résultats obtenus sont présentés dans le tableau I.

**Tableau I - Comparatif de traitement de désinfection de bois in vivo**

| Variété Greffons/PG | Avec TEC (50°C - 45 mn) | | | | Sans TEC | | | |
|---|---|---|---|---|---|---|---|---|
| | H₂O₂ | T1 | Anolyte Neutre | H₂O | H₂O₂ | T1 | Anolyte Neutre | H₂O |
| SO4(203) | B.obt | | | B.obt | E.lata | B.obt | | B.obt |
| R110 (151) | B.obt | B.obt | | B.obt | | | | B.obt |
| Sauv.B (905) | | | | B.obt | | | | B.obt |
| Merlot. N (182) | B.obt | | | | | | | B.obt |

| | | | | | | | | |
|---|---|---|---|---|---|---|---|---|
| (TEC : traitement à l'eau chaude) | | | | | | | | |

Seuls 2 Porte-greffes et 2 variétés sont représentés car elles sont les plus significatives en termes de représentativité viticole. Les résultats indiquent que l'ADN de deux champignons seulement a été retrouvé dans les échantillons.

La présence du nom d'un champignon (B. opt pour *Botryosphaeria obtusa)* dans ce tableau indique que ce champignon a été retrouvé au moins une fois parmi les individus évalué. Si rien n'est indiqué, c'est qu'il n'a jamais été retrouvé.

Ces résultats montrent que l'anolyte neutre présente une bonne efficacité contre *Botryosphaeria obtusa.* Il est toutefois difficile de conclure quant aux autres pathogènes qui n'ont même pas été identifié avant traitement.

L'utilisation de la technique de néphélométrie a permis de confirmer ces résultats : ainsi, l'utilisation d'anolyte neutre à une concentration de 25 % a permis d'inhiber la croissance des agents pathogènes *Neofusiccum parvum* et *Diplodia seriata* (inhibition entre 80 et 95 %). L'inhibition a été de 40-50 % à une concentration de 6 %.

### Exemple 2 - Essai comparatif in vivo du traitement à l'anolyte neutre avec l'H₂O₂ (eau oxygénée), Désogerme (Biofongicide - laboratoire A.C.I, noté T1), et l'H₂O.

C'est pourquoi un essai *in vitro* a été réalisé, afin de comparer l'effet de l'eau, l'eau oxygénée, le désogerme et l'anolyte neutre (100%) sur 8 champignons référencés comme pathogènes et associé aux différentes maladies du bois.

Des souches des 8 champignons mentionnés ci-dessus ont été déposées sur milieu de culture peu discriminant (Milieu PDA - Potato Dextrose Agar).

On a ensuite ajouté 10ml de chaque solution dans les boites de Petri avec les souches de champignons inoculés, que l'on a laissé pendant 12h. Après cette période, les 10 ml ont été déversés et on a observé la croissance des champignons pendant plusieurs semaines en mesurant le rayon de mycélium formé ou non au fur et à mesure de la croissance des champignons, à une température d'environ 25°C.

Ces expériences *in vitro* ont permis de mettre en évidence une absence de croissance pour tous les champignons mis en contact avec l'anolyte neutre, ce qui n'a pas été le cas pour les autres solutions testées.

On peut toutefois noter que l'eau hydrogénée présente une certaine efficacité d'inhibition de la croissance des champignons.

### Exemple 3 - Taux de reprise après plantation, essai comparatif in vivo du traitement à l'anolyte neutre avec l'H₂O₂ (eau oxygénée), Désogerme (Biofongicide - laboratoire A.C.I, noté T1), et l'H₂O.

Le résultat de reprise après plantation (croissance des plantes) est très important, car le traitement ne doit pas être traumatisant pour les plants de vignes.

L'évaluation du taux de reprise a été réalisée sur plus de 500 plants et le pourcentage de reprise est celui mentionné dans le tableau II.

**Tableau II - Taux de Reprise des plants traités après différents traitements**

| | Anolyte Neutre | T1 | H₂O₂ | Témoin H₂O |
|---|---|---|---|---|
| 8 jrs après plantation | 74,5% | 74,7% | 59% | 79,4% |
| 20 jrs après plantation | 95,9% | 94,9% | 94,8% | 95% |

On note que l'eau oxygénée altère le bois lorsqu'elle est mise en contact avec les boutures pendant la phase de réhydratation. L'anolyte neutre apporte des résultats similaires voir supérieurs en terme de désinfection sans altérer le bois. L'intégrité physiologique de la plante reste l'élément le plus important à prendre en compte lorsque l'on réalise un plant de vigne. En conséquence, l'eau oxygénée présente un intérêt inférieur à l'anolyte neutre en tant qu'agent de désinfection contre les pathogènes de la vigne.

### Exemple 4 - Maintien de la présence de champignons favorables

Lors de la production des plants de vigne, il est possible de les inoculer avec du *Trichoderma atroviride,* qui présente un effet contre les champignons responsables des maladies du bois de la vigne. Les plants ont été inoculés par les Trichoderma par immersion à plusieurs endroits et à plusieurs moments dans une solution de Trichoderma à une concentration de 10⁷ spores/ml).

Les évaluations sur les plants inoculés avec Trichoderma ont été réalisées suivant le même type de protocole qu'à l'exemple 1, c'est-à-dire par immersion de plants de vigne prêts à être commercialisés pendant 12 h dans de l'anolyte neutre a 100%.

L'évaluation a été réalisé d'abord visuellement par observation sur boîte de Pétri de la croissance du champignon a partir de rondelles de bois prélevés sur les échantillons de plants testés, puis par identification moléculaire par PCR pour valider l'identité exacte de la souche de Trichoderma en croissance.

Toutes les boites ensemencées avec des rondelles de bois issus de plants avec Trichoderma puis trempé dans de l'anolyte neutre 100% pendant 12h ont révélé la présence de Trichoderma sur boite et par analyse PCR.

Ce démontre que ce Trichoderma n'est pas suffisamment affecté par l'anolyte neutre pour disparaître. L'inhibition n'est que de 12 % à une concentration d'anolyte neutre de 6 %, et de 54 % pour une concentration de 25 %, ainsi que mesurée par néphélométrie.

### Exemple 5 - Autre protocole

Le système peut être perfectionné en utilisant des concentrations d'anolyte neutre adaptées au stade physiologique de la plante.

Effectivement, l'application d'anolyte neutre à 100% pendant 12h peut s'avérer traumatisante pour le bois, malgré les résultats positifs de reprise.

Les doses et temps d'application ont été réduits, mais l'anolyte neutre est appliqué à plusieurs moments.

une étape d'application d'anolyte neutre sur les porte-greffes et greffons pendant la phase de réhydratation précédant l'étape de greffe.

On applique ainsi de l'anolyte neutre à une concentration entre 3 et 50% (en fonction de l'origine et de l'état initial du matériel végétal prélevé) sur les porte-greffes et greffons après récolte et stockage des bois, pendant la phase de réhydratation précédent l'étape de greffage. L'application est réalisée par immersion totale du matériel végétal dans la solution pendant une durée pouvant aller de 12 à 48 heures selon l'état de déshydratation.

On expose également les plants de vigne à l'anolyte neutre pendant les étapes de cicatrisation (concentration 100 %) et stratification (concentration 3 à 10 %) après greffage.

L'anolyte neutre est aussi appliqué à une concentration pouvant aller jusqu'à 50% sur les plants de vigne pendant la phase de croissance.

Ce protocole donne également des résultats positifs, puisque la presque-totalité des plants produits (98 sur 100 testés) sont exempts tout champignon dans la limite des outils de diagnostic.

### Exemple 6 - Essais en plein champ

Les résultats en application en plein champs sur vignoble en place sont également très encourageants, malgré une année relativement préservée en terme de pression fongique type mildiou ou oïdium.

Ainsi, la parcelle qui n'a reçu que de l'anolyte neutre à 50%, une fois par semaine, en guise de traitement phytosanitaire, ne montre aucun signe de contamination fongique.

## Revendications

1. Utilisation d'anolyte neutre pour décontaminer des bois de vigne.

2. Utilisation selon la revendication 1, **caractérisé en ce qu'**elle est effectuée lors de la production de plants de vigne.

3. Utilisation selon l'une des revendications 1 ou 2, **caractérisée en ce qu'**elle présente une étape d'application d'anolyte neutre sur les porte-greffes et greffons pendant la phase de réhydratation précédant l'étape de greffe.

4. Utilisation selon la revendication 3, **caractérisée en ce que** la concentration d'anolyte neutre pendant la phase de réhydratation est comprise entre 3 et 50% (en volume).

5. Utilisation selon l'une des revendications 1 à 4, **caractérisée en ce qu'**elle comprend une étape d'exposition des plants de vigne à l'anolyte neutre pendant l'étape de cicatrisation après greffage.

6. Utilisation selon la revendication 5, **caractérisée en ce que** la concentration d'anolyte neutre pendant l'étape de cicatrisation est supérieure à 80%.

7. Utilisation selon l'une des revendications 1 à 6, **caractérisée en ce qu'**elle comprend une étape d'application d'anolyte neutre sur les plants de vigne pendant la phase de stratification.

8. Utilisation selon la revendication 7, **caractérisée en ce que** la concentration d'anolyte neutre pendant la phase de stratification est comprise entre 3 et 10% (en volume).

9. Utilisation selon l'une des revendications 1 à 8, **caractérisée en ce qu'**elle comprend une étape d'application d'anolyte neutre sur les plants de vigne pendant la phase de croissance.

10. Utilisation selon la revendication 9, **caractérisée en ce que** la concentration d'anolyte neutre pendant la phase de croissance est inférieure ou égale à 50%.

11. Utilisation selon la revendication 1, **caractérisée en ce qu'**elle est effectuée sur des vignes enracinées en plein champ.

12. Procédé de production d'un plant de vigne greffé-soudé comprenant au moins une étape choisie parmi
a) une étape consistant à entailler un porte-greffe et un greffon
b) une étape consistant à assembler lesdits porte-greffe et greffon afin de former un assemblage
c) une étape comprenant la cicatrisation de l'assemblage pour former un cal de soudure et la stratification dudit cal
d) une étape de croissance du plant de vigne,
**caractérisé en ce que** l'on applique une solution d'anolyte neutre aux plants en cours de production lors de cette étape.

13. Procédé selon la revendication 12, **caractérisé en ce qu'**il comprend au moins deux étapes choisies parmi a), b), c), et d), au cours desquelles on expose les plants en cours de production à une solution d'anolyte neutre.

14. Procédé selon la revendication 12 ou 13, **caractérisé en ce qu'**il comprend au moins trois étapes choisies parmi a), b), c), et d), au cours desquelles on expose les plants en cours de production à une solution d'anolyte neutre.

15. Procédé selon l'une des revendications 12 à 14, **caractérisé en ce qu'**il comprend les quatre étapes a), b), c), et d), et que l'on expose les plants en cours de production à une solution d'anolyte neutre au cours de chacune des étapes.

## Patentansprüche

1. Verwendung eines neutralen Anolyten zum Dekontaminieren von Weinstöcken Holz.

2. Verwendung nach Anspruch 1, **dadurch gekennzeichnet, dass** sie während der Produktion von Weinpflanzen durchgeführt wird.

3. Verwendung nach einem der Ansprüche 1 oder 2, **dadurch gekennzeichnet, dass** sie einen Schritt des Aufbringens von neutralem Anolyten auf die Unterlagen und die Edelreise während der Phase der Rehydratisierung, die dem Veredelungsschritt vorausgeht, aufweist.

4. Verwendung nach Anspruch 3, **dadurch gekennzeichnet, dass** die Konzentration von neutralem Anolyten während der Phase der Rehydratisierung zwischen 3 und 50% (bezogen auf Volumen) beträgt.

5. Verwendung nach einem der Ansprüche 1 bis 4, **dadurch gekennzeichnet, dass** sie einen Schritt des Aussetzens der Weinpflanzen gegenüber dem neutralen Anolyten während des Schritts der Vernarbung nach der Veredelung umfasst.

6. Verwendung nach Anspruch 5, **dadurch gekennzeichnet, dass** die Konzentration von neutralem Anolyten während des Schritts der Vernarbung mehr als 80% beträgt.

7. Verwendung nach einem der Ansprüche 1 bis 6, **dadurch gekennzeichnet, dass** sie einen Schritt des Aufbringens von neutralem Anolyten auf die Weinpflanzen während der Phase der Stratifizierung umfasst.

8. Verwendung nach Anspruch 7, **dadurch gekennzeichnet, dass** die Konzentration von neutralem Anolyten während der Phase der Stratifizierung zwischen 3 und 10% (bezogen auf Volumen) beträgt.

9. Verwendung nach einem der Ansprüche 1 bis 8, **dadurch gekennzeichnet, dass** sie einen Schritt des Aufbringens von neutralem Anolyten auf die Weinpflanzen während der Phase des Wachstums umfasst.

10. Verwendung nach Anspruch 9, **dadurch gekennzeichnet, dass** die Konzentration von neutralem Anolyten während der Phase des Wachstums unter oder gleich 50% beträgt.

11. Verwendung nach Anspruch 1, **dadurch gekennzeichnet, dass** sie an auf freiem Feld gepflanzten Weinstöcken durchgeführt wird.

12. Verfahren zur Herstellung einer Weinpfropfrebe, das mindestens einen Schritt umfasst, ausgewählt aus
a) einem Schritt, der aus dem Einschneiden einer Unterlage und eines Edelreises besteht,
b) einem Schritt, der aus dem Zusammenfügen der Unterlage und des Edelreises besteht, um eine Verbindung herzustellen,
c) einem Schritt, der die Vernarbung der Verbindung, so dass ein Veredelungskallus gebildet wird, und die Stratifizierung des Kallus umfasst,
d) einem Schritt des Wachstums der Weinpflanze,
**dadurch gekennzeichnet, dass** man eine Lösung von neutralem Anolyten auf die Pflanzen im Verlauf der Produktion während dieses Schritts aufbringt.

13. Verfahren nach Anspruch 12, **dadurch gekennzeichnet, dass** es mindestens zwei aus a), b), c) und d) ausgewählte Schritte umfasst, in deren Verlauf man die Pflanzen während der Produktion einer Lösung von neutralem Anolyten aussetzt.

14. Verfahren nach Anspruch 12 oder 13, **dadurch gekennzeichnet, dass** es mindestens drei aus a), b), c) und d) ausgewählte Schritte umfasst, in deren Verlauf man die Pflanzen während der Produktion einer Lösung von neutralem Anolyten aussetzt.

15. Verfahren nach einem der Ansprüche 12 bis 14, **dadurch gekennzeichnet, dass** es die vier Schritte a), b), c) und d) umfasst und dass man die Pflanzen während der Produktion einer Lösung von neutralem Anolyten während jedes der Schritte aussetzt.

## Claims

1. Use of neutral anolyte for decontaminating grapevine wood.

2. Use according to Claim 1, **characterized in that** it is carried out during the production of grapevine seedlings.

3. Use according to either of Claims 1 and 2, **characterized in that** it has a step of application of neutral anolyte on the rootstocks and scions during the rehydration phase preceding the grafting step.

4. Use according to Claim 3, **characterized in that** the concentration of neutral anolyte during the rehydration phase is between 3% and 50% (by volume).

5. Use according to one of Claims 1 to 4, **characterized in that** it comprises a step of exposing the grapevine seedlings to the neutral anolyte during the healing step after grafting.

6. Use according to Claim 5, **characterized in that** the concentration of neutral anolyte during the heating step is greater than 80%.

7. Use according to one of Claims 1 to 6, **characterized in that** it comprises a step of application of neutral anolyte on the grapevine seedlings during the stratification phase.

8. Use according to Claim 7, **characterized in that** the concentration of neutral anolyte during the stratification phase is between 3% and 10% (by volume).

9. Use according to one of Claims 1 to 8, **characterized in that** it comprises a step of application of neutral anolyte on the grapevine seedlings during the growth phase.

10. Use according to Claim 9, **characterized in that** the concentration of neutral anolyte during the growth phase is less than or equal to 50%.

11. Use according to Claim 1, **characterized in that** it is carried out on rooted vines in the open.

12. Method of producing a grafted grapevine seedling comprising at least one step selected from
a) a step consisting of cutting a rootstock and a scion
b) a step consisting of assembling said rootstock and scion in order to form an assembly
c) a step comprising healing of the assembly to form a graft union callus and stratification of said callus
d) a step of growth of the grapevine seedling,
**characterized in that** a solution of neutral anolyte is applied on the seedlings during production in this step.

13. Method according to Claim 12, **characterized in that** it comprises at least two steps selected from a), b), c), and d), during which the seedlings are exposed during production to a solution of neutral anolyte.

14. Method according to Claim 12 or 13, **characterized in that** it comprises at least three steps selected from a), b), c), and d), during which the seedlings are exposed during production to a solution of neutral anolyte.

15. Method according to one of Claims 12 to 14, **characterized in that** it comprises the four steps a), b), c), and d), and **in that** the seedlings are exposed during production to a solution of neutral anolyte in each of the steps.
